# EUROPEAN PATENT APPLICATION

(11) **EP 4 694 406 A1**
(43) Date of publication of application: **11.02.2026**
(21) Application number: 24784431.9
(22) Date of filing: 07.04.2024
(51) Int. Cl.: H04W 56/00

(54) **TIMING ADVANCE DETERMINATION METHOD AND APPARATUS, AND PROCESSOR-READABLE STORAGE MEDIUM**

(30) Priority: 07.04.2023 CN 202310369452
(71) Applicant: Datang Mobile Communications Equipment Co., Ltd., Beijing 100085 (CN)
(72) Inventor: LI, Hui, Beijing 100085 (CN); REN, Bin, Beijing 100085 (CN); SHI, Yuangu, Beijing 100085 (CN)
(74) Representative: Maiwald GmbH
(86) International application number: PCT/CN2024/086353
(87) International publication number: WO 2024/208349

(57) **Abstract**

This disclosure provides a timing advance (TA) determination method and apparatus, and a processor-readable storage medium, and pertains to the field of communications. The TA determination method is performed by a terminal, and includes: receiving TA obtaining indication information from a network device; determining a TA value in at least one of the following manners according to the TA obtaining indication information: keeping the TA value unchanged; determining the TA value according to a preset rule; adjusting, by the terminal, the TA value; or setting the TA value to 0.

## Description

### CROSS-REFERENCE TO RELATED APPLICATION

This application claims a priority to Chinese patent application No. 202310369452.6 filed with CNIPA on April 7, 2023, and entitled "timing advance determination method and apparatus, and processor-readable storage medium", a disclosure of which is incorporated herein by reference in its entirety.

### TECHNICAL FIELD

The present disclosure relates to the field of communications, and in particular to a timing advance determination method and apparatus, and a processor-readable storage medium.

### BACKGROUND

When a terminal moves to a new cell, the terminal achieves uplink time synchronization through a random access process, i.e., obtaining timing advance (TA).

Low-power terminals perform positioning while operating in a non-connected state (radio resource control (RRC) inactive (RRC_INACTIVE) state/RRC idle (RRC_IDLE) state). If a terminal continues to use a random access process to achieve uplink synchronization after moving to a new cell, power consumption of the terminal will increase. This is especially true when the terminal is moving among multiple cells, as frequent random access processes are required to achieve uplink synchronization in different cells, which fails to meet low power requirements.

### SUMMARY

The present disclosure aims to provide a timing advance determination method and apparatus, and a processor-readable storage medium, which can reduce power consumption of a terminal.

An embodiment of the present disclosure provides a timing advance (TA) determination method, which is performed by a terminal and includes:
receiving TA obtaining indication information from a network device;
determining a TA value in at least one of the following manners according to the TA obtaining indication information:
   keeping the TA value unchanged;
   determining the TA value according to a preset rule;
   adjusting, by the terminal, the TA value; or
   setting the TA value to 0.

In some embodiments, the TA obtaining indication information includes:
a manner in which the terminal determines the TA value; or
TA type identifiers;
wherein the manner in which the terminal determines the TA value indicates at least one of the following: keeping the TA value unchanged, adjusting, by the terminal, the TA value, or setting the TA value to 0;
the TA type identifier indicates a TA type corresponding to a cell within a valid area where the terminal is located.

In some embodiments, in a case that the TA obtaining indication information includes the TA type identifiers,
when the terminal moves from a source cell to a target cell, in a case that the TA type identifier of the source cell is the same as the TA type identifier of the target cell, the terminal uses the same TA as that of the source cell; in a case that the TA type identifier of the source cell is different from the TA type identifier of the target cell, the terminal adjusts the TA value; or
when the terminal moves from the source cell to the target cell, the terminal uses the same TA value as that of a first cell in the target cell, the first cell having the same TA type identifier as that of the target cell; in a case that the TA value of the first cell is unknown, the terminal adjusts the TA value.

In some embodiments, adjusting the TA value includes:
measuring, by the terminal, downlink reference signals of different cells, and determining, by the terminal, downlink time differences of arrival between the cells according to the measurement results;
adjusting the TA value according to the downlink time difference of arrival.

In some embodiments, measuring, by the terminal, the downlink reference signals of the different cells, and determining, by the terminal, the downlink time differences of arrival between the cells according to the measurement results and adjusting the TA value according to the downlink time difference of arrival includes:
when the terminal moves from a source cell to a target cell, measuring, by the terminal, arrival times of the downlink reference signals of the source cell and the target cell to obtain the downlink time difference of arrival between the cells, and adding, by the terminal, a TA value of the source cell and the downlink time difference of arrival to obtain a TA value of the target cell.

In some embodiments, the TA obtaining indication information is configured independently for each cell; or, the TA obtaining indication information is configured for multiple cells.

In some embodiments, in a case that the TA obtaining indication information includes the manner in which the terminal determines the TA value, the method further includes:
receiving inter-cell synchronization information from the network device, and adjusting the TA value according to the inter-cell synchronization information.

In some embodiments, the inter-cell synchronization information includes a synchronization difference of each cell relative to a reference cell.

An embodiment of the present disclosure provides a timing advance (TA) determination method, which is performed by a network device and includes:
sending TA obtaining indication information to a terminal, wherein the TA obtaining indication information indicates to the terminal that a TA value is determined in at least one of the following manners:
keeping the TA value unchanged;
determining the TA value according to a preset rule;
adjusting, by the terminal, the TA value; or
setting the TA value to 0.

In some embodiments, the TA obtaining indication information includes:
a manner in which the terminal determines the TA value; or
TA type identifiers;
wherein the manner in which the terminal determines the TA value indicates at least one of the following: keeping the TA value unchanged, adjusting, by the terminal, the TA value, or setting the TA value to 0;
the TA type identifier indicates a TA type corresponding to a cell within a valid area where the terminal is located.

In some embodiments, the TA obtaining indication information is configured independently for each cell; or, the TA obtaining indication information is configured for multiple cells.

In some embodiments, in a case that the TA obtaining indication information includes the manner in which the terminal determines the TA value, the method further includes:
sending inter-cell synchronization information to the terminal to instruct the terminal to adjust the TA value according to the inter-cell synchronization information.

In some embodiments, the inter-cell synchronization information includes a synchronization difference of each cell relative to a reference cell.

In some embodiments, in a case that the TA obtaining indication information includes the TA type identifiers,
when the terminal moves from a source cell to a target cell, in a case that the TA type identifier of the source cell is the same as the TA type identifier of the target cell, the TA obtaining indication information instructs the terminal to use the same TA as that of the source cell; in a case that the TA type identifier of the source cell is different from the TA type identifier of the target cell, the TA obtaining indication information instructs the terminal to adjust the TA value; or
when the terminal moves from the source cell to the target cell, the terminal uses the same TA value as that of a first cell in the target cell, the first cell having the same TA type identifier as that of the target cell; in a case that the TA value of the first cell is unknown, the TA obtaining indication information instructs the terminal to adjust the TA value.

An embodiment of the present disclosure provides a timing advance (TA) determination apparatus, including a memory, a transceiver, and a processor;
wherein the memory is configured to store a computer program; the transceiver is configured to transmit and receive data under the control of the processor; and the processor is configured to read the computer program in the memory and perform the following steps:
receiving TA obtaining indication information from a network device;
determining a TA value in at least one of the following manners according to the TA obtaining indication information:
   keeping the TA value unchanged;
   determining the TA value according to a preset rule;
   adjusting, by the terminal, the TA value; or
   setting the TA value to 0.

In some embodiments, the TA obtaining indication information includes:
a manner in which the terminal determines the TA value; or
TA type identifiers;
wherein the manner in which the terminal determines the TA value indicates at least one of the following: keeping the TA value unchanged, adjusting, by the terminal, the TA value, or setting the TA value to 0;
the TA type identifier indicates a TA type corresponding to a cell within a valid area where the terminal is located.

In some embodiments, in a case that the TA obtaining indication information includes the TA type identifiers, the processor is configured to read the computer program in the memory and perform the following steps:
when the terminal moves from a source cell to a target cell, in a case that the TA type identifier of the source cell is the same as the TA type identifier of the target cell, using, by the terminal, the same TA as that of the source cell; in a case that the TA type identifier of the source cell is different from the TA type identifier of the target cell, adjusting the TA value; or
when the terminal moves from the source cell to the target cell, using, by the terminal, the same TA value as that of a first cell in the target cell, the first cell having the same TA type identifier as that of the target cell; in a case that the TA value of the first cell is unknown, adjusting the TA value.

In some embodiments, the processor is configured to read the computer program in the memory and perform the following steps:
measuring downlink reference signals of different cells, and determining a downlink time difference of arrival between the cells according to the measurement results;
adjusting the TA value according to the downlink time difference of arrival.

In some embodiments, the processor is configured to read the computer program in the memory and perform the following steps:
when the terminal moves from a source cell to a target cell, measuring arrival times of the downlink reference signals of the source cell and the target cell to obtain the downlink time difference of arrival between the cells; and adding a TA value of the source cell and the downlink time difference of arrival to obtain a TA value of the target cell.

In some embodiments, the TA obtaining indication information is configured independently for each cell; or, the TA obtaining indication information is configured for multiple cells.

In some embodiments, in a case that the TA obtaining indication information includes the manner in which the terminal determines the TA value, the processor is further configured to read a computer program in the memory and perform the following steps:
receiving inter-cell synchronization information from the network device, and adjusting the TA value according to the inter-cell synchronization information.

In some embodiments, the inter-cell synchronization information includes a synchronization difference of each cell relative to a reference cell.

An embodiment of the present disclosure provides a timing advance (TA) determination apparatus, including a memory, a transceiver, and a processor;
wherein the memory is configured to store a computer program; the transceiver is configured to transmit and receive data under the control of the processor; and the processor is configured to read the computer program in the memory and perform the following steps:
sending TA obtaining indication information to a terminal, wherein the TA obtaining indication information indicates to the terminal that a TA value is determined in at least one of the following manners:
keeping the TA value unchanged;
determining the TA value according to a preset rule;
adjusting, by the terminal, the TA value; or
setting the TA value to 0.

In some embodiments, the TA obtaining indication information includes:
a manner in which the terminal determines the TA value; or
TA type identifiers;
wherein the manner in which the terminal determines the TA value indicates at least one of the following: keeping the TA value unchanged, adjusting, by the terminal, the TA value, or setting the TA value to 0;
the TA type identifier indicates a TA type corresponding to a cell within a valid area where the terminal is located.

In some embodiments, the TA obtaining indication information is configured independently for each cell; or, the TA obtaining indication information is configured for multiple cells.

In some embodiments, in a case that the TA obtaining indication information includes the manner in which the terminal determines the TA value, the processor is configured to read a computer program in the memory and perform the following step:
sending inter-cell synchronization information to the terminal to instruct the terminal to adjust the TA value according to the inter-cell synchronization information.

In some embodiments, the inter-cell synchronization information includes a synchronization difference of each cell relative to a reference cell.

In some embodiments, in a case that the TA obtaining indication information includes the TA type identifiers,
when the terminal moves from a source cell to a target cell, in a case that the TA type identifier of the source cell is the same as the TA type identifier of the target cell, the TA obtaining indication information instructs the terminal to use the same TA as that of the source cell; in a case that the TA type identifier of the source cell is different from the TA type identifier of the target cell, the TA obtaining indication information instructs the terminal to adjust the TA value; or
when the terminal moves from the source cell to the target cell, the terminal uses the same TA value as that of a first cell in the target cell, the first cell having the same TA type identifier as that of the target cell; in a case that the TA value of the first cell is unknown, the TA obtaining indication information instructs the terminal to adjust the TA value.

An embodiment of the present disclosure provides a timing advance (TA) determination apparatus, including:
a receiving unit, configured to receive TA obtaining indication information from a network device;
a determining unit, configured to determine a TA value in at least one of the following manners according to the TA obtaining indication information:
   keeping the TA value unchanged;
   determining the TA value according to a preset rule;
   adjusting, by the terminal, the TA value; or
   setting the TA value to 0.

An embodiment of the present disclosure provides a timing advance (TA) determination apparatus, including:
a sending unit, configured to send TA obtaining indication information to a terminal, wherein the TA obtaining indication information indicates to the terminal that a TA value is determined in at least one of the following manners:
keeping the TA value unchanged;
determining the TA value according to a preset rule;
adjusting, by the terminal, the TA value; or
setting the TA value to 0.

An embodiment of the present disclosure provides a processor-readable storage medium, wherein the processor-readable storage medium stores a computer program, and the computer program is configured to, when executed by a processor, implement the above methods.

The foregoing technical solutions of the present disclosure have the following beneficial effects.

In the above solutions, the terminal determines the TA according to the TA obtaining indication information, and the terminal can keep the value of TA unchanged, and/or the terminal determines the TA value according to a preset rule, and/or the terminal adjusts the TA value autonomously, and/or the TA value is 0. In this way, when the terminal moves within the valid area composed of multiple cells, the terminal does not need to frequently enter the connected state (RRC_CONNECTED) to obtain the TA of the new cell, thereby reducing the power consumption of the terminal.

### BRIEF DESCRIPTION OF THE DRAWINGS

Fig. 1 is a schematic diagram of a wireless communication system architecture according to an embodiment of the present disclosure;
Fig. 2 is a flow chart of a timing advance determination method on a terminal side according to an embodiment of the present disclosure;
Fig. 3 is a flow chart of a timing advance determination method on a network device side according to an embodiment of the present disclosure;
Fig. 4 is a schematic diagram of a valid area configured by a network device according to an embodiment of the present disclosure;
Fig. 5 is a modular diagram of a timing advance determination apparatus on a terminal side according to an embodiment of the present disclosure;
Fig. 6 is a modular diagram of a timing advance determination apparatus on a network device side according to an embodiment of the present disclosure;
Fig. 7 is a block diagram of a timing advance determination apparatus on a terminal side according to an embodiment of the present disclosure;
Fig. 8 is a block diagram of a timing advance determination apparatus on a network device side according to an embodiment of the present disclosure.

### DETAILED DESCRIPTION

The following will be combined with the accompanying drawings in the embodiments of the present disclosure to clearly and completely describe the technical solutions in the embodiments of the present disclosure. Obviously, the embodiments described are only part of the embodiments of the present disclosure and not all of the embodiments. Based on the embodiments of the present disclosure, all other embodiments obtained by ordinary technicians in this field without making any creative efforts shall fall within the scope of the present disclosure.

In embodiments of the present disclosure, the term "and/or" describes the association relationship between associated objects, indicating that three relationships can exist. For example, A and/or B can represent three situations: A exists alone, A and B exist simultaneously, and B exists alone. The character "/" generally indicates that the associated objects are in an "or" relationship.

In embodiments of the present disclosure, the term "multiple" refers to two or more than two, and other quantifiers are similar thereto.

The technical solutions provided by the embodiments of the present disclosure can be applied to a variety of systems, particularly the fifth generation mobile communication technology (5G) system. For example, applicable systems may include the global system of mobile communication (GSM) system, the code division multiple access (CDMA) system, the wideband code division multiple access (WCDMA) general packet radio service (GPRS) system, the long term evolution (LTE) system, the LTE frequency division duplex (FDD) system, the LTE time division duplex (TDD) system, the long term evolution advanced (LTE-A) system, the universal mobile telecommunication system (UMTS), the world-wide interoperability for microwave access (WiMAX) system, and the 5G New Radio (NR) system. These various systems all include terminal devices and network devices. The system may also include a core network parts, such as the Evolved Packet System (EPS) and the 5G system (5GS).

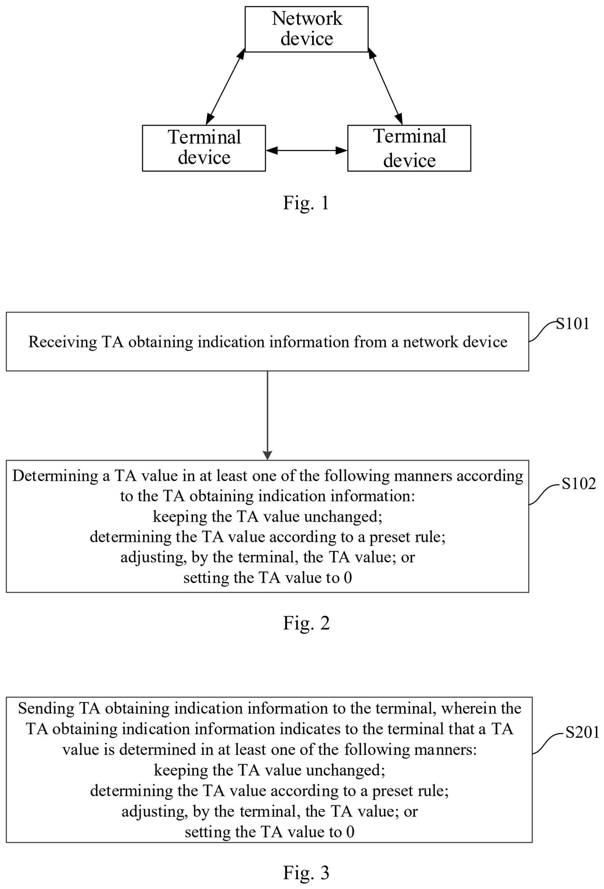

Fig. 1 shows a block diagram of a wireless communication system to which the embodiments of the present disclosure may be applied. The wireless communication system includes a terminal device and a network device.

The terminal device described with respect to the embodiments of the present disclosure may refer to a device that provides voice and/or data connectivity to users, handheld device with wireless connectivity, or other processing device connected to a wireless modem. The names of terminal devices may vary in different systems. For example, in 5G systems, the terminal device may be referred to as user equipment (UE). A wireless terminal device can communicate with one or more core networks (CNs) via a radio access network (RAN). The wireless terminal device can be a mobile terminal device, such as mobile phone (also known as "cellular" phone), and computer with mobile terminal device, for example, portable, pocket-sized, handheld, built-in, or in-vehicle mobile device that exchanges voice and/or data with a radio access network. Examples include Personal Communication Service (PCS) phones, cordless phones, Session Initiated Protocol (SIP) phones, Wireless Local Loop (WLL) stations, and Personal Digital Assistants (PDAs). The wireless terminal device may also be referred to as a system, a subscriber unit, a subscriber station, a mobile station, a mobile, a remote station, an access point, a remote terminal, an access terminal, a user terminal, a user agent, or a user device, but is not limited in the embodiments of the present disclosure.

The network device described with respect to the embodiments of the present disclosure may be a base station, which may include multiple cells providing services to terminals. Depending on the specific application scenario, a base station may also be referred to as an access point, or may be a device in an access network that communicates with a wireless terminal device via one or more sectors over the air interface, or may be referred to by other names. The network device may be used to convert received air frames into Internet Protocol (IP) packets, or vice versa, acting as a router between the wireless terminal device and the rest of the access network, which may include an Internet Protocol (IP) communication network. The network device may also coordinate attribute management of the air interface. For example, the network device involved in the embodiments of the present disclosure may be a base transceiver station (BTS) in the Global System for Mobile communications (GSM) or Code Division Multiple Access (CDMA), NodeB in Wide-band Code Division Multiple Access (WCDMA), evolutionary NodeB (eNB or e-NodeB) in the Long Term Evolution (LTE) system, 5G base station (gNB) in the next generation 5G network architecture, home evolved NodeB (HeNB), relay node, femto, pico, etc., and are not limited in the embodiments of the present disclosure. In some network structures, the network devices may include a centralized unit (CU) node and a distributed unit (DU) node, and the centralized unit and the distributed unit may also be geographically separated.

The Network device and terminal device can each use one or more antennas for Multiple Input Multiple Output (MIMO) transmission therebetween. MIMO transmission can be either Single User MIMO (SU-MIMO) or Multiple User MIMO (MU-MIMO). Depending on the configuration and number of antennas, MIMO transmission can be two-dimensional MIMO (2D-MIMO), three-dimensional MIMO (3D-MIMO), full-dimensional MIMO (FD-MIMO), or massive MIMO. It can also employ diversity transmission, precoded transmission, beamformed transmission or the like.

The following first introduces the contents involved in the solutions provided by the embodiments of the present disclosure.

When a terminal moves to a new cell, the terminal achieves uplink time synchronization through a random access process, i.e., obtaining timing advance (TA). The random access process can be a four-step process or a two-step process. Taking the four-step process as an example, the process is as follows:
Step 1: the terminal sends a random access preamble sequence, namely, message 1 (Msg1), on the physical random access channel (PRACH) resource;
Step 2: the terminal receives a random access response (RAR) message, namely, message 2 (Msg2), on the physical downlink control channel (PDCCH) and/or the physical downlink shared channel (PDSCH);
Step 3: the terminal sends a message 3 (Msg3) on the physical uplink shared channel (PUSCH);
Step 4: the terminal receives a contention resolution message (i.e., Msg4) on the PDSCH.

After the terminal sends the preamble sequence in Msg1, the terminal detects the RAR message fed back via the downlink PDCCH and/or PDSCH in a RAR time window. If the corresponding RAR message is detected, it means that the preamble sequence sent by the terminal has been detected by the base station. The base station estimates the TA based on this preamble sequence, and indicates to terminal the TA value and the uplink scheduling grant for scheduling the terminal's transmission of Msg3 through the RAR message. The terminal achieves uplink synchronization based on the TA, and sends the Msg3 on the PUSCH according to the uplink scheduling grant. After receiving the Msg3 and parsing the terminal identifier contained in the Msg3, the base station sends the Msg4 on the PDSCH. The terminal receives and decodes the contention resolution message contained in the Msg4 on the PDSCH, and completes the 4-step random access process after the contention is successfully resolved.

To achieve uplink positioning, after completing the above uplink synchronization process, the terminal sends a sounding reference signal (SRS) for positioning to the base station. After receiving the SRS for positioning, the base station performs time or angle measurements on the SRS and reports the measurement results to the positioning server for position calculation, to obtain the terminal's position information.

Low-power terminals perform positioning while operating in a non-connected state (RRC_INACTIVE/RRC_IDLE). If a terminal continues to use the aforementioned random access process to achieve uplink synchronization after moving to a new cell, the terminal's power consumption will be increased. This is especially true when the terminal moves among multiple cells, as the terminal has to frequently perform random access processes to achieve uplink synchronization in different cells, which fails to meet low power requirements.

Based on the above, embodiments of the present disclosure provide a timing advance determination method and apparatus, and a processor-readable storage medium, which can reduce power consumption of a terminal.

The method and the apparatus are based on the same innovative concept. Since the principles of solving problems by the method and the apparatus are similar, for the implementation of one of the apparatus and the method, reference may be made to the other of the apparatus and the method, and the repeated parts will not be described.

An embodiment of the present disclosure provides a timing advance (TA) determination method. The method is performed by a terminal, as shown in Fig. 2, and includes:
Step S101: receiving TA obtaining indication information from a network device;
Step S102: determining a TA value in at least one of the following manners according to the TA obtaining indication information:
   keeping the TA value unchanged;
   determining the TA value according to a preset rule;
   adjusting, by the terminal, the TA value; or
   setting the TA value to 0.

In this embodiment, the terminal determines the TA according to the TA obtaining indication information, and the terminal can keep the value of TA unchanged, and/or the terminal determines the TA value according to a preset rule, and/or the terminal adjusts the TA value autonomously, and/or the TA value is 0. In this way, when the terminal moves within the valid area composed of multiple cells, the terminal does not need to frequently enter the connected state (RRC_CONNECTED) to obtain the TA of the new cell, thereby reducing the power consumption of the terminal. The valid area refers to an area composed of multiple cells, and the terminal can move within the valid area.

The preset rule may be: determining that the value of TA is the value of TA of a certain reference cell, for example, the TA value may be the value of TA obtained for the cell in which the terminal completes random access; or, the preset rule may be: determining that the value of TA is a sum of the value of TA of a certain reference cell and the downlink time difference of arrival between the current cell and the reference cell; or, the preset rule may be: determining that the value of TA is a sum of the value of TA of a certain reference cell and the inter-cell synchronization difference between the current cell and the reference cell.

The preset rule may be defined in the protocol, or configured by the network device to the terminal, or pre-negotiated between the terminal and the network device, or determined by the terminal autonomously, etc.

In some embodiments, the TA obtaining indication information includes:
a manner in which the terminal determines the TA value; or
TA type identifiers;
wherein the manner in which the terminal determines the TA value indicates at least one of the following: keeping the TA value unchanged, adjusting, by the terminal, the TA value, or setting the TA value to 0;
the TA type identifier indicates a TA type corresponding to a cell within a valid area where the terminal is located.

In this embodiment, the network device can pre-configure the manner in which the terminal determines the TA value or the TA type identifiers, so that when the terminal moves among multiple cells, the terminal can determine the TA according to the pre-configured manner in which the terminal determines the TA value or TA type identifiers, and can obtain the TAs of different cells without frequently using the random access process, thereby reducing the power consumption of the terminal and ensuring the transmission of the positioning SRS reference signal.

In some embodiments, the terminal adjusting the TA value includes the terminal autonomously adjusting the TA value.

In some embodiments, the terminal adjusting the TA value includes the terminal autonomously adjusting the TA value with reference to other relevant information.

In some embodiments, the terminal adjusting the TA value includes the terminal adjusting the TA value according to TA obtaining indication information and/or other relevant information.

In some embodiments, the valid area may include multiple cells, and each of the multiple cells has a corresponding TA type, for example, a cell 1 corresponds to type 1, a cell 2 corresponds to type 3, etc. This is for exemplary purposes only.

In some embodiments, in a case that the TA obtaining indication information includes the TA type identifiers,
when the terminal moves from a source cell to a target cell, in a case that the TA type identifier of the source cell is the same as the TA type identifier of the target cell, the terminal uses the same TA as that of the source cell; in a case that the TA type identifier of the source cell is different from the TA type identifier of the target cell, the terminal adjusts the TA value; or
when the terminal moves from the source cell to the target cell, the terminal uses the same TA value as that of a first cell in the target cell, the first cell having the same TA type identifier as that of the target cell; in a case that the TA value of the first cell is unknown, the terminal adjusts the TA value.

The terminal may measure downlink reference signals of different cells, and determine the downlink time difference of arrival between the cells based on the measurement results. The TA value can be adjusted based on the downlink time difference of arrival. For example, the network device configures two TA type identifiers, designated Type 1 and Type 2, and predefines that cells with the same TA type identifier use the same TA. This predefinition can be defined in the protocol, configured by the network device to the terminal, pre-negotiated between the terminal and the network device, or determined by the terminal autonomously. The valid area pre-configured by the network device for the terminal includes cells 1 to 6. Type 1 is configured for cells 1, 4, 5, and 2, and Type 2 is configured for cells 3 and 6. When the terminal moves from cell 1 to cell 2, the TA type identifiers of cell 2 and cell 1 are the same, and the terminal uses TA_{ref} in cell 2 that is the TA obtained through random access in cell 1. When the terminal moves to cell 3, the TA type identifiers of cell 3 and cell 2 are different. The terminal measures the arrival time of the synchronization signal block (SSB) of cell 2 and the arrival time of the SSB of cell 3, calculates the time difference of arrival δ₁, and thus calculates the TA of cell 3: TA₃ = TA_{ref} + δ₁. When the terminal moves to cell 6, the TA type identifiers of cell 6 and cell 3 are the same, and the terminal adopts TA₃ as the TA of cell 6.

In some embodiments, the terminal autonomously adjusting the TA value includes:
measuring, by the terminal, downlink reference signals of different cells, and determining, by the terminal, downlink time differences of arrival between the cells according to the measurement results;
adjusting the TA value according to the downlink time difference of arrival.

In this way, the terminal can determine the TA by measuring the downlink reference signal, and can obtain the TAs of different cells without frequently using the random access process, thereby reducing the power consumption of the terminal and ensuring the transmission of the positioning SRS reference signal.

In some embodiments, measuring, by the terminal, the downlink reference signals of the different cells, and determining, by the terminal, the downlink time differences of arrival between the cells according to the measurement results and adjusting the TA value according to the downlink time difference of arrival includes:
when the terminal moves from a source cell to a target cell, measuring, by the terminal, arrival times of the downlink reference signals of the source cell and the target cell to obtain the downlink time difference of arrival between the cells, and adding, by the terminal, a TA value of the source cell and the downlink time difference of arrival to obtain a TA value of the target cell.

For example, the reference TA_{ref} may be the TA obtained by the terminal in the cell 1 where the terminal completes random access, the time difference of arrival between the SSB of cell 1 and the SSB of the current cell measured by the terminal is δ, then the TA of the current cell is TA_{ref} + δ.

In some embodiments, the TA obtaining indication information is configured independently for each cell; or, the TA obtaining indication information is configured for multiple cells. A valid area pre-configured by the network device for the terminal includes multiple cells, the TA obtaining indication information can be configured independently for each of the multiple cells, allowing different cells to flexibly obtain the TA; or the TA obtaining indication information can be configured uniformly for multiple cells, thereby reducing configuration signaling overhead.

For example, the network device can configure two manners of obtaining TA: manner 1 is to keep the TA value unchanged, and manner 2 is to adjust, by the terminal, the TA value autonomously. The valid area pre-configured by the network device for the terminal includes cells 1 to 6. Manner 1 is configured for cells 4, 5, and 2, and manner 2 is configured for cells 3 and 6. Cell 1 is the cell where the terminal completes random access. When the terminal moves from cell 1 to cell 2, the terminal determines that the TA of cell 2 is the same as that of cell 1, which is TA_{ref}. When the terminal moves to cell 3, the terminal measures the arrival time of the SSB of cell 2 and the arrival time of the SSB of cell 3, calculates the time difference of arrival δ₁, and then calculates the TA of cell 3: TA₃ = TA_{ref} + δ₁. When the terminal moves to cell 4, the terminal determines that the TA of cell 4 is the same as that of cell 3. When the terminal moves to cell 5, the terminal determines that the TA of cell 5 is the same as that of cell 4. When the terminal moves to cell 6, the terminal measures the arrival time of the SSB of cell 5 and the arrival time of the SSB of cell 6, calculates the time difference of arrival δ₂, and then calculates the TA of cell 6: TA₆ = TA_{ref} + δ₁ + δ₂.

In some embodiments, in a case that the TA obtaining indication information includes the manner in which the terminal determines the TA value, the method further includes:
receiving inter-cell synchronization information from the network device, and adjusting the TA value according to the inter-cell synchronization information.

When cells within the valid area cannot be perfectly synchronized, the TA value needs to be adjusted according to the inter-cell synchronization information to obtain an accurate TA. The inter-cell synchronization information may include the synchronization difference of each cell relative to the reference cell.

For example, the network device can configure two manners of obtaining TA: manner 1 is to keep the TA value unchanged, and manner 2 is to adjust, by the terminal, the TA value autonomously. The valid area pre-configured by the network device for the terminal includes cells 1 to 6. Manner 1 is configured for cells 4, 5, and 2, and manner 2 is configured for cells 3 and 6. Cell 1 is the cell in which the terminal completes random access. The synchronization difference between cells 3 and 2 is Δ_{2, 3}, and the synchronization difference between cells 6 and 5 is Δ_{5, 6}. When the terminal moves from cell 1 to cell 2, the terminal determines that the TA of cell 2 is the same as that of cell 1, which is TA_{ref}. When the terminal moves to cell 3, the terminal measures the arrival time of the SSB of cell 2 and the arrival time of the SSB of cell 3, calculates the time difference of arrival δ₁, and then calculates the TA of cell 3: TA₃ = TA_{ref} + δ₁ + Δ_{2, 3}. When the terminal moves to cell 4, the terminal determines that the TA of cell 4 is the same as that of cell 3. When the terminal moves to cell 5, the terminal determines that the TA of cell 5 is the same as that of cell 4. When the terminal moves to cell 6, the terminal measures the arrival time of the SSB of cell 5 and the arrival time of the SSB of cell 6, calculates the time difference of arrival δ₂, and then calculates the TA of cell 6: TA₆ = TA_{ref} + δ₁ + Δ_{2, 3} + δ₂ + Δ_{5, 6}.

An embodiment of the present disclosure provides a timing advance (TA) determination method. The method is performed by a network device, as shown in Fig. 3, and includes:
Step S201: sending TA obtaining indication information to the terminal, wherein the TA obtaining indication information indicates to the terminal that a TA value is determined in at least one of the following manners:
keeping the TA value unchanged;
determining the TA value according to a preset rule;
adjusting, by the terminal, the TA value; or
setting the TA value to 0.

In this embodiment, the terminal determines the TA according to the TA obtaining indication information, and the terminal can keep the value of TA unchanged, and/or the terminal determines the TA value according to a preset rule, and/or the terminal adjusts the TA value autonomously, and/or the TA value is 0. In this way, when the terminal moves within the valid area composed of multiple cells, the terminal does not need to frequently enter the connected state (RRC_CONNECTED) to obtain the TA of the new cell, thereby reducing the power consumption of the terminal. The valid area refers to an area composed of multiple cells, and the terminal can move within the valid area.

The preset rule may be: determining that the value of TA is the value of TA of a certain reference cell, for example, it may be the value of TA obtained for the cell in which the terminal completes random access; or, the preset rule may be: determining that the value of TA is a sum of the value of TA of a certain reference cell and the downlink time difference of arrival between the current cell and the reference cell; or, the preset rule may be: determining that the value of TA is a sum of the value of TA of a certain reference cell and the inter-cell synchronization difference between the current cell and the reference cell.

The preset rules may be defined in the protocol, or configured by the network device to the terminal, or pre-negotiated between the terminal and the network device, or determined by the terminal autonomously, etc.

In some embodiments, the TA obtaining indication information includes:
a manner in which the terminal determines the TA value; or
TA type identifiers;
wherein the manner in which the terminal determines the TA value indicates at least one of the following: keeping the TA value unchanged, adjusting, by the terminal, the TA value, or setting the TA value to 0;
the TA type identifier indicates a TA type corresponding to a cell within a valid area where the terminal is located.

In this embodiment, the network device can pre-configure the manner in which the terminal determines the TA value or the TA type identifiers, so that when the terminal moves among multiple cells, the terminal can determine the TA according to the pre-configured manner in which the terminal determines the TA value or TA type identifiers, and can obtain the TAs of different cells without frequently using the random access process, thereby reducing the power consumption of the terminal and ensuring the transmission of the positioning SRS reference signal.

In some embodiments, the valid area may include multiple cells, and each of the multiple cells has a corresponding TA type, for example, cell 1 corresponds to type 1, cell 2 corresponds to type 3, etc. This is for exemplary purposes only.

In some embodiments, the TA obtaining indication information is configured independently for each cell; or, the TA obtaining indication information is configured for multiple cells. A valid area pre-configured by the network device for the terminal includes multiple cells, the TA obtaining indication information can be configured independently for each of the multiple cells, allowing different cells to flexibly obtain the TA; or the TA obtaining indication information can be configured uniformly for multiple cells, thereby reducing configuration signaling overhead.

For example, the network device can configure two manners of obtaining TA: manner 1 is to keep the TA value unchanged, and manner 2 is to adjust, by the terminal, the TA value autonomously. The valid area pre-configured by the network device for the terminal includes cells 1 to 6. Manner 1 is configured for cells 4, 5, and 2, and manner 2 is configured for cells 3 and 6. Cell 1 is the cell where the terminal completes random access. When the terminal moves from cell 1 to cell 2, the terminal determines that the TA of cell 2 is the same as that of cell 1, which is TA_{ref}. When the terminal moves to cell 3, the terminal measures the arrival time of the SSB of cell 2 and the arrival time of the SSB of cell 3, calculates the time difference of arrival δ₁, and then calculates the TA of cell 3: *TA*₃ *= TA_{ref}* + δ₁. When the terminal moves to cell 4, the terminal determines that the TA of cell 4 is the same as that of cell 3. When the terminal moves to cell 5, the terminal determines that the TA of cell 5 is the same as that of cell 4. When the terminal moves to cell 6, the terminal measures the arrival time of the SSB of cell 5 and the arrival time of the SSB of cell 6, calculates the time difference of arrival δ₂, and then calculates the TA of cell 6: *TA*₆ = *TA_{ref}* + δ₁ + δ₂.

In some embodiments, in a case that the TA obtaining indication information includes the manner in which the terminal determines the TA value, the method further includes:
sending inter-cell synchronization information to the terminal to instruct the terminal to adjust the TA value according to the inter-cell synchronization information.

When cells within the valid area cannot be perfectly synchronized, the TA value needs to be adjusted according to the inter-cell synchronization information to obtain an accurate TA. The inter-cell synchronization information may include the synchronization difference of each cell relative to the reference cell.

For example, the network device can configure two manners of obtaining TA: manner 1 is to keep the TA value unchanged, and manner 2 is to adjust, by the terminal, the TA value autonomously. The valid area pre-configured by the network device for the terminal includes cells 1 to 6. Manner 1 is configured for cells 4, 5, and 2, and manner 2 is configured for cells 3 and 6. Cell 1 is the cell in which the terminal completes random access. The synchronization difference between cells 3 and 2 is Δ_{2, 3}, and the synchronization difference between cells 6 and 5 is Δ_{5, 6}. When the terminal moves from cell 1 to cell 2, the terminal determines that the TA of cell 2 is the same as that of cell 1, which is *TA_{ref}*. When the terminal moves to cell 3, the terminal measures the arrival time of the SSB of cell 2 and the arrival time of the SSB of cell 3, calculates the time difference of arrival δ₁, and then calculates the TA of cell 3: *TA*₃ *= TA_{ref}* + δ₁ + Δ_{2, 3}. When the terminal moves to cell 4, the terminal determines that the TA of cell 4 is the same as that of cell 3. When the terminal moves to cell 5, the terminal determines that the TA of cell 5 is the same as that of cell 4. When the terminal moves to cell 6, the terminal measures the arrival time of the SSB of cell 5 and the arrival time of the SSB of cell 6, calculates the time difference of arrival δ₂, and then calculates the TA of cell 6: *TA*₆ = *TA_{ref}* + δ₁ + Δ_{2, 3} + δ₂ + Δ_{5, 6}.

In some embodiments, in a case that the TA obtaining indication information includes the TA type identifiers,
when the terminal moves from a source cell to a target cell, in a case that the TA type identifier of the source cell is the same as the TA type identifier of the target cell, the TA obtaining indication information instructs the terminal to use the same TA as that of the source cell; in a case that the TA type identifier of the source cell is different from the TA type identifier of the target cell, the TA obtaining indication information instructs the terminal to adjust the TA value; or
when the terminal moves from the source cell to the target cell, the terminal uses the same TA value as that of a first cell in the target cell, the first cell having the same TA type identifier as that of the target cell; in a case that the TA value of the first cell is unknown, the TA obtaining indication information instructs the terminal to adjust the TA value.

The terminal can measure the downlink reference signals of different cells and determine the downlink time difference of arrival between the cells based on the measurement results; the TA value can be adjusted based on the downlink time difference of arrival. For example, the network device configures two TA type identifiers, designated Type 1 and Type 2, and predefines that cells with the same TA type identifier use the same TA. The predefined content can be defined in the protocol, configured by the network device to the terminal, pre-negotiated between the terminal and the network device, or determined by the terminal autonomously. The valid area pre-configured by the network device for the terminal includes cells 1 to 6. Type 1 is configured for cells 1, 4, 5, and 2, and Type 2 is configured for cells 3 and 6. When the terminal moves from cell 1 to cell 2, the TA type identifiers of cell 2 and cell 1 are the same, and the terminal uses *TA_{ref}* in cell 2 that is the TA obtained through random access in cell 1. When the terminal moves to cell 3, the TA type identifiers of cell 3 and cell 2 are different. The terminal measures the arrival time of the SSB of cell 2 and the arrival time of the SSB of cell 3, calculates the time difference of arrival δ₁, and then calculates the TA of cell 3: *TA*₃ *= TA_{ref}* + δ₁. When the terminal moves to cell 6, the TA type identifiers of cell 6 and cell 3 are the same, and the terminal adopts *TA*₃ as the TA of cell 6.

Taking the network device being a base station as an example, the following further describes the TA determination method provided by the embodiment of the present disclosure in combination with the accompanying drawings and specific embodiments.

### Example 1:

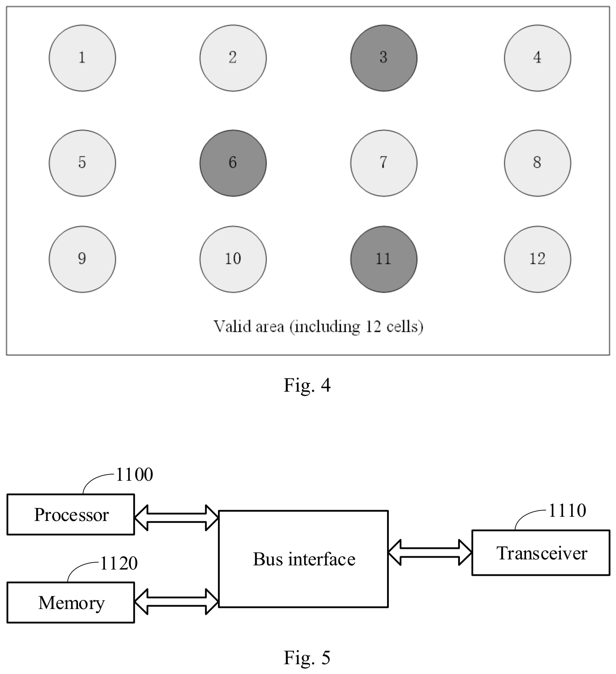

Assume that a valid area configured by the network device includes 12 cells (i.e., cell 1 to cell 12), as shown in Fig. 4. A terminal first moves into cell 1 and obtains the TA of cell 1 through random access. This TA is defined as a reference TA and is denoted as TA_{ref}. Subsequently, the base station in cell 1 sends a radio resource control (RRC) release signaling to the terminal, causing the terminal to enter the RRC_INACTIVE state. The RRC release signaling includes manners of obtaining TAs of multiple cells within the valid area preconfigured by the network device for the terminal. Assume that the network device configures two manners of obtaining TA. Manner 1 indicates that a reference TA (TA_{ref}) is adopted for the corresponding cell. The reference TA can be the TA obtained for the cell where the terminal completed random access (i.e., the TA of cell 1). Manner 2 indicates that the TA of the corresponding cell is obtained through autonomous adjustment by the terminal. One manner of autonomous adjustment by the terminal includes: the terminal measures the time difference of arrival between the SSB of a neighboring cell using Manner 1 and the SSB of the current cell, and uses this time difference of arrival to adjust the TA of the current cell. For example, assuming that the time difference of arrival is denoted as δ, the TA of the current cell (assuming it is cell i) is denoted as TAᵢ = TA_{ref} + δ. A configuration by the base station may be as shown in Table 1:

**Table 1**

| Cell ID | Manner of obtaining TA |
|---|---|
| Cell 2 | Manner 1 |
| Cell 3 | Manner 2 |
| Cell 4 | Manner 1 |
| Cell 5 | Manner 1 |
| Cell 6 | Manner 2 |
| Cell 7 | Manner 1 |
| Cell 8 | Manner 1 |
| Cell 9 | Manner 1 |
| Cell 10 | Manner 1 |
| Cell 11 | Manner 2 |
| Cell 12 | Manner 1 |

The terminal obtains the above configuration information through RRC_release signaling. When the terminal moves within the valid area and moves to a new cell, the terminal determines the new cell's TA based on the configuration information. For example, when the terminal moves from cell 1 to cell 2, the terminal determines that cell 2's TA is the same as cell 1's TA, namely TA_{ref}. When the terminal moves to cell 3, the terminal measures the arrival time of cell 2's SSB and the arrival time of cell 3's SSB, calculates the time difference of arrival δ, and then calculates the TA of the new cell: TA₃ = TA_{ref} + δ. The terminal uses the determined TA to transmit the positioning SRS reference signal in the new cell.

In addition, since some cells may have small coverage, the network device can also configure three manners of obtaining TA, wherein the Manner 3 is TA = 0. Thus, if a cell is configured with the Manner 3, when a terminal moves to this cell, the TA value is set to 0.

### Example 2:

In this example, assuming that cells within the valid area cannot be perfectly synchronized, for a cell using Manner 2, the network device needs to further indicate the synchronization differences between the cell and neighboring cells. In this case, the configuration information configured by the base station also include the synchronization difference between the cell and one or more neighboring cells. As shown in Table 2:

**Table 2**

| Cell ID | Manner of obtaining TA |
|---|---|
| Cell 2 | Manner 1 |
| Cell 3 | Manner 2, synchronization difference (Δ_{2, 3}, Δ_{4, 3}, Δ_{7, 3}, Δ_{8, 3}) |
| Cell 4 | Manner 1 |
| Cell 5 | Manner 1 |
| Cell 6 | Manner 2, synchronization difference (Δ_{1, 6}, Δ_{2, 6}, Δ_{5, 6}, Δ_{7, 6}, Δ_{9, 6}, Δ_{10, 6}) |
| Cell 7 | Manner 1 |
| Cell 8 | Manner 1 |
| Cell 9 | Manner 1 |
| Cell 10 | Manner 1 |
| Cell 11 | Manner 2, synchronization difference (Δ _{7, 11}, Δ_{10, 11}, Δ_{12, 11}, Δ_{8, 11}) |
| Cell 12 | Manner 1 |

The synchronization difference Δ_{i, j} represents the synchronization difference between cell i and cell j. Based on this configuration, when the terminal moves to cell 3, the terminal measures the SSB of cell 2 to obtain the arrival time, and also measures the SSB of cell 3 to obtain the arrival time, calculates the time difference of arrival δ, and compensates for the synchronization difference to calculate the TA of this cell: TA₃ = TA_{ref} + δ + Δ_{2, 3}.

Another implementation is that the base station configures the synchronization difference between each cell and the reference cell in the RRC_release signaling. For example, the reference cell is the cell corresponding to the reference TA, i.e., cell 1. In this way, the configured synchronization difference information is as shown in Table 3:

**Table 3**

| Synchronization difference |
|---|
| Δ_{1, 2} |
| Δ_{1, 3} |
| Δ_{1, 4} |
| Δ_{1, 5} |
| Δ_{1, 6} |
| Δ_{1, 7} |
| Δ_{1, 8} |
| Δ_{1, 9} |
| Δ_{1, 10} |
| Δ_{1, 11} |
| Δ_{1, 12} |

The terminal can obtain the synchronization difference between any two cells based on the above synchronization difference information, and then compensate the TA obtained by using Manner 2 for the synchronization difference to obtain the correct TA value. The terminal uses the determined TA to transmit the positioning SRS reference signal in the corresponding cell.

### Example 3:

Assume that the valid area contains 12 cells, as shown in Fig. 4. The terminal first moves into cell 1 and obtains the TA of cell 1 through random access. Subsequently, the base station in cell 1 sends an RRC release signaling to the terminal, and the terminal enters the RRC_INACTIVE state. The RRC release signaling contains the TA type identifiers of multiple cells in the valid area pre-configured by the network device for the terminal. Assume that the network device configures two TA type identifiers, denoted as type 1 and type 2, and it is predefined that cells with the same type identifier use the same TA. When the terminal moves from the original cell to the new cell, if the TA type identifiers are the same, the terminal uses the same TA as that of the original cell; if the TA type identifiers are different, the terminal obtains the TA by autonomous adjustment. One way for the terminal to adjust autonomously is that the terminal measures the time difference of arrival between the SSB of the original cell and the SSB of the new cell, and uses this time difference of arrival to adjust the TA of the current cell. A configuration by the base station can be as shown in Table 4:

**Table 4**

| Cell ID | TA Type |
|---|---|
| Cell 1 | Type 1 |
| Cell 2 | Type 1 |
| Cell 3 | Type 2 |
| Cell 4 | Type 1 |
| Cell 5 | Type 1 |
| Cell 6 | Type 2 |
| Cell 7 | Type 1 |
| Cell 8 | Type 1 |
| Cell 9 | Type 1 |
| Cell 10 | Type 1 |
| Cell 11 | Type 2 |
| Cell 12 | Type 1 |

When the terminal moves from cell 1 to cell 2, the terminal determines that cell 2 and cell 1 have the same TA type. Therefore, in cell 2, the terminal uses the TA obtained through random access in cell 1. Further, when the terminal moves to cell 3, which has a different TA type than cell 2, the terminal measures the arrival time of the SSB of cell 2 and the arrival time of the SSB of cell 3, calculates the time difference of arrival δ, and then calculates the TA of the current cell: TA₃ = TA_{ref} + δ. When the terminal continues to move to cell 6, since cell 6 has the same TA type as cell 3, the terminal uses TA₃ as the TA of cell 6 without changing TA₃. When the terminal moves to cell 7, since cell 7 has the same TA type as cell 1, cell 7 uses the TA of cell 1. And so on. The terminal uses the determined TA to transmit the positioning SRS reference signal in the corresponding cell.

### Example 4:

This example adopts the configuration at the valid area level, that is, the configured manner of obtaining TA is applicable to the entire valid area. Assume that the network device configures three manners of obtaining TA, wherein Manner 1 indicates that the TA value of the original cell is kept unchanged for the new cell, Manner 2 indicates that the TA of the new cell is obtained through autonomous adjustment by the terminal, and Manner 3 indicates that the TA values of all cells are 0. The base station configures a manner of obtaining TA in the RRC_release signaling, and this manner is used for all cells in the valid area. For example, if the base station configures TA obtaining manner 1, when the terminal moves in the valid area, the TA obtained by random access in cell 1 is used for all cells. For another example, if the RRC_release signaling of the base station configures TA obtaining manner 2, then after the terminal arrives at the new cell, the terminal will measure the time difference of arrival of the SSB of the original cell and the SSB of the new cell to obtain the TA of the new cell. The terminal uses the determined TA to transmit the positioning SRS reference signal in the corresponding cell.

To address the above technical issues, on the network device side, an embodiment of the present disclosure provides a timing advance (TA) determination apparatus. As shown in Fig. 5, the apparatus includes a memory 1120, a transceiver 1110, and a processor 1100:
the memory 1120 is configured to store a computer program; the transceiver 1110 is configured to transmit and receive data under the control of the processor 1100; the processor 1100 is configured to read the computer program in the memory 1120 and perform the following steps:
sending TA obtaining indication information to a terminal, wherein the TA obtaining indication information indicates to the terminal that a TA value is determined in at least one of the following manners:
keeping the TA value unchanged;
determining the TA value according to a preset rule;
adjusting, by the terminal, the TA value; or
setting the TA value to 0.

In some embodiments, the TA obtaining indication information includes:
a manner in which the terminal determines the TA value; or
TA type identifiers;
in which the terminal determines the value of TA indicates at least one of the following: keeping the TA value unchanged, adjusting, by the terminal, the TA value, or setting the TA value to 0;
the TA type identifier indicates a TA type corresponding to a cell within a valid area where the terminal is located.

In some embodiments, the TA obtaining indication information is configured independently for each cell; or, the TA obtaining indication information is configured for multiple cells.

In some embodiments, in a case that the TA obtaining indication information includes the manner in which the terminal determines the TA value, the processor 1100 is configured to read the computer program in the memory 1120 and perform the following step:
sending inter-cell synchronization information to the terminal to instruct the terminal to adjust the TA value according to the inter-cell synchronization information.

In some embodiments, the inter-cell synchronization information includes a synchronization difference of each cell relative to a reference cell.

In some embodiments, in a case that the TA obtaining indication information includes the TA type identifiers,
when the terminal moves from a source cell to a target cell, in a case that the TA type identifier of the source cell is the same as the TA type identifier of the target cell, the TA obtaining indication information instructs the terminal to use the same TA as that of the source cell; in a case that the TA type identifier of the source cell is different from the TA type identifier of the target cell, the TA obtaining indication information instructs the terminal to adjust the TA value; or
when the terminal moves from the source cell to the target cell, the terminal uses the same TA value as that of a first cell in the target cell, the first cell having the same TA type identifier as that of the target cell; in a case that the TA value of the first cell is unknown, the TA obtaining indication information instructs the terminal to adjust the TA value.

The transceiver 1110 is configured to receive and send data under the control of the processor 1100.

In Fig. 5, the bus architecture may include any number of interconnected buses and bridges, to connect various circuits such as one or more processors specifically represented by processor 1100 and a memory represented by memory 1120. The bus architecture can also link various other circuits such as peripherals, regulators, and power management circuits together, which are all well known in the art and are therefore not further described herein. The bus interface provides an interface. The transceiver 1110 can be a plurality of components, namely, a transmitter and a receiver, providing a unit for communicating with various other devices on a transmission medium. The transmission medium includes a wireless channel, a wired channel, an optic fiber, or the like. The processor 1100 is responsible for managing the bus architecture and general processing, and the memory 1120 may store data used by the processor 1100 when performing operations.

The processor 1100 may be a central processing unit (CPU), an application specific integrated circuit (ASIC), a field programmable gate array (FPGA), or a complex programmable logic device (CPLD). The processor may also adopt a multi-core architecture.

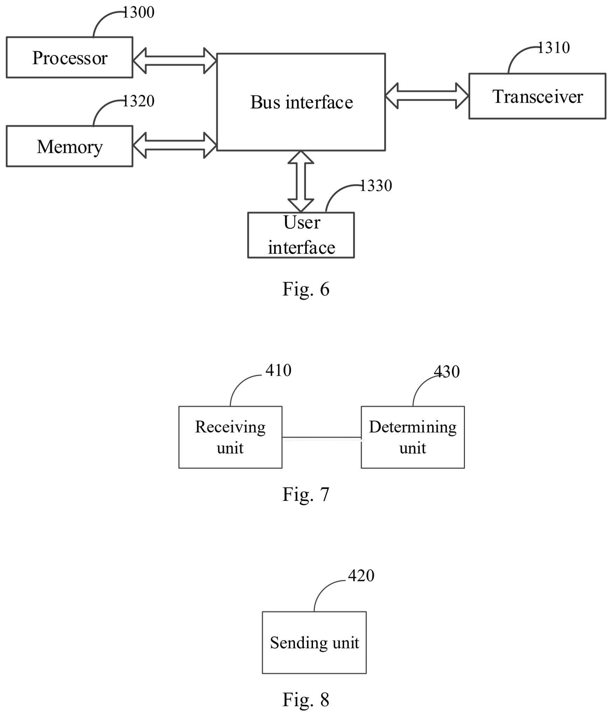

On the terminal side, an embodiment of the present disclosure provides a timing advance (TA) determination apparatus. As shown in Fig. 6, the apparatus includes a memory 1320, a transceiver 1310, and a processor 1300:
the memory 1320 is configured to store a computer program; the transceiver 1310 is configured to send and receive data under the control of the processor 1300; the processor 1300 is configured to read the computer program in the memory 1320 and perform the following steps:
receiving TA obtaining indication information from a network device;
determining a TA value in at least one of the following manners according to the TA obtaining indication information:
   keeping the TA value unchanged;
   determining the TA value according to a preset rule;
   adjusting, by the terminal, the TA value; or
   setting the TA value to 0.

In some embodiments, the TA obtaining indication information includes:
a manner in which the terminal determines the TA value; or
TA type identifiers;
wherein the manner in which the terminal determines the TA value indicates at least one of the following: keeping the TA value unchanged, adjusting, by the terminal, the TA value, or setting the TA value to 0;
the TA type identifier indicates a TA type corresponding to a cell within a valid area where the terminal is located.

In some embodiments, in a case that the TA obtaining indication information includes the TA type identifiers, the processor 1300 is configured to read the computer program in the memory 1320 and perform the following steps:
when the terminal moves from a source cell to a target cell, in a case that the TA type identifier of the source cell is the same as the TA type identifier of the target cell, using, by the terminal, the same TA as that of the source cell; in a case that the TA type identifier of the source cell is different from the TA type identifier of the target cell, adjusting the TA value; or
when the terminal moves from the source cell to the target cell, using, by the terminal, the same TA value as that of a first cell in the target cell, the first cell having the same TA type identifier as that of the target cell; in a case that the TA value of the first cell is unknown, adjusting the TA value.

In some embodiments, the processor 1300 is configured to read the computer program in the memory 1320 and perform the following steps:
measuring downlink reference signals of different cells, and determining a downlink time difference of arrival between the cells according to the measurement results;
adjusting the TA value according to the downlink time difference of arrival.

In some embodiments, the processor 1300 is configured to read the computer program in the memory 1320 and perform the following steps:
when the terminal moves from a source cell to a target cell, measuring arrival times of the downlink reference signals of the source cell and the target cell to obtain the downlink time difference of arrival between the cells; and adding a TA value of the source cell and the downlink time difference of arrival to obtain a TA value of the target cell.

In some embodiments, the TA obtaining indication information is configured independently for each cell; or, the TA obtaining indication information is configured for multiple cells.

In some embodiments, in a case that the TA obtaining indication information includes the manner in which the terminal determines the TA value, the processor 1300 is configured to read the computer program in the memory 1320 and perform the following steps:
receiving inter-cell synchronization information from the network device, and adjusting the TA value according to the inter-cell synchronization information.

In some embodiments, the inter-cell synchronization information includes a synchronization difference of each cell relative to a reference cell.

The transceiver 1310 is configured to receive and send data under the control of the processor 1300.

In Fig. 6, the bus architecture may include any number of interconnected buses and bridges, to connect various circuits such as one or more processors specifically represented by processor 1300 and a memory represented by memory 1320. The bus architecture can also link various other circuits such as peripherals, regulators, and power management circuits together, which are all well known in the art and are therefore not further described herein. The bus interface provides an interface. The transceiver 1310 can be a plurality of components, namely, a transmitter and a receiver, providing a unit for communicating with various other devices on a transmission medium. The transmission medium includes a wireless channel, a wired channel, an optic fiber, or the like. For different user equipment, the user interface may also be an interface capable of connecting external or internal devices as required, and the connected devices may include but are not limited to a keypad, a display, a speaker, a microphone, a joystick, and the like.

The processor 1300 is responsible for managing the bus architecture and general processing, and the memory 1320 can store data used by the processor 1300 when performing operations.

In some embodiments, the processor 1300 may be a CPU, an ASIC, an FPGA, or a CPLD, and the processor may also adopt a multi-core architecture.

By calling the computer program stored in the memory, the processor implements any of the methods provided by the embodiments of the present disclosure according to the obtained executable instructions. The processor and the memory can also be arranged physically separately.

It should be noted here that the above-mentioned apparatus provided in the embodiment of the present disclosure can implement all the method steps implemented in the above-mentioned method embodiment and can achieve the same technical effect. The parts and beneficial effects of this embodiment that are the same as those in the method embodiment will not be described in detail here.

An embodiment of the present disclosure provides a timing advance (TA) determination apparatus. As shown in Fig. 7, the apparatus includes:
a receiving unit 410, configured to receive TA obtaining indication information from a network device;
a determining unit 430, configured to determine a TA value in at least one of the following manners according to the TA obtaining indication information:
   keeping the TA value unchanged;
   determining the TA value according to a preset rule;
   adjusting, by the terminal, the TA value; or
   setting the TA value to 0.

In some embodiments, the TA obtaining indication information includes:
a manner in which the terminal determines the TA value; or
TA type identifiers;
wherein the manner in which the terminal determines the TA value indicates at least one of the following: keeping the TA value unchanged, adjusting, by the terminal, the TA value, or setting the TA value to 0;
the TA type identifier indicates a TA type corresponding to a cell within a valid area where the terminal is located.

In some embodiments, in a case that the TA obtaining indication information includes the TA type identifiers,
when the terminal moves from a source cell to a target cell, in a case that the TA type identifier of the source cell is the same as the TA type identifier of the target cell, the terminal uses the same TA as that of the source cell; in a case that the TA type identifier of the source cell is different from the TA type identifier of the target cell, the determining unit 430 adjusts the value of the TA; or
when the terminal moves from the source cell to the target cell, the terminal uses the same TA value as that of a first cell in the target cell, the first cell having the same TA type identifier as that of the target cell; in a case that the TA value of the first cell is unknown, the determining unit 430 adjusts the TA value.

In some embodiments, the determining unit 430 is specifically configured to: measure downlink reference signals of different cells, determine the downlink time difference of arrival between the cells according to the measurement results; and adjust the value of TA according to the downlink time difference of arrival.

In some embodiments, the terminal moves from a source cell to a target cell, and the determining unit 430 is specifically configured to: measure arrival times of the downlink reference signals of the source cell and the target cell to obtain the downlink time difference of arrival between the cells; and add the TA value of the source cell and the downlink time difference of arrival to obtain the TA value of the target cell.

In some embodiments, the TA obtaining indication information is configured independently for each cell; or, the TA obtaining indication information is configured for multiple cells.

In some embodiments, in a case that the TA obtaining indication information includes the manner in which the terminal determines the TA value, the receiving unit 410 is further configured to: receive inter-cell synchronization information from the network device, and adjust the TA value according to the inter-cell synchronization information.

In some embodiments, the inter-cell synchronization information includes a synchronization difference of each cell relative to a reference cell.

An embodiment of the present disclosure provides a timing advance (TA) determination apparatus. As shown in Fig. 8, the apparatus includes:
a sending unit 420, configured to send TA obtaining indication information to a terminal, wherein the TA obtaining indication information indicates to the terminal that a TA value is determined in at least one of the following manners:
keeping the TA value unchanged;
determining the TA value according to a preset rule;
adjusting, by the terminal, the TA value; or
setting the TA value to 0.

In some embodiments, the TA obtaining indication information includes:
a manner in which the terminal determines the TA value; or
TA type identifiers;
in which the terminal determines the value of TA indicates at least one of the following: keeping the TA value unchanged, adjusting, by the terminal, the TA value, or setting the TA value to 0;
the TA type identifier indicates a TA type corresponding to a cell within a valid area where the terminal is located.

In some embodiments, the TA obtaining indication information is configured independently for each cell; or, the TA obtaining indication information is configured for multiple cells.

In some embodiments, in a case that the TA obtaining indication information includes the manner in which the terminal determines the TA value, the sending unit 420 is further configured to: send inter-cell synchronization information to the terminal to instruct the terminal to adjust the TA value according to the inter-cell synchronization information.

In some embodiments, the inter-cell synchronization information includes a synchronization difference of each cell relative to a reference cell.

In some embodiments, in a case that the TA obtaining indication information includes the TA type identifiers,
when the terminal moves from a source cell to a target cell, in a case that the TA type identifier of the source cell is the same as the TA type identifier of the target cell, the TA obtaining indication information instructs the terminal to use the same TA as that of the source cell; in a case that the TA type identifier of the source cell is different from the TA type identifier of the target cell, the TA obtaining indication information instructs the terminal to adjust the TA value; or
when the terminal moves from the source cell to the target cell, the terminal uses the same TA value as that of a first cell in the target cell, the first cell having the same TA type identifier as that of the target cell; in a case that the TA value of the first cell is unknown, the TA obtaining indication information instructs the terminal to adjust the TA value.

It should be noted that the division of units in the embodiments of the present disclosure is schematic and is merely a logical functional division. In actual implementation, other division methods may be used. Furthermore, the functional units in the various embodiments of the present disclosure may be integrated into a single processing unit, or each unit may exist physically separately, or two or more units may be integrated into a single unit. The aforementioned integrated units may be implemented in the form of hardware or software functional units.

If the integrated unit is implemented as a software functional unit and sold or used as an independent product, it can be stored in a processor-readable storage medium. Based on such an understanding, essential parts, or parts contributing to the related art, of the technical solution of the present disclosure may be implemented in a form of a software product. The computer software product is stored in a storage medium, including several instructions to enable a computer device (which can be a personal computer, server, or network device, etc.) or a processor to perform all or part of the steps of the method described in each embodiment of the present disclosure. The aforementioned storage medium includes media that can store program codes, such as: USB flash drive, mobile hard disk, read-only memory (ROM), random access memory (RAM), magnetic disk or optical disc.

It should be noted here that the above-mentioned apparatus provided in the embodiment of the present disclosure can implement all the method steps implemented in the above-mentioned method embodiment and can achieve the same technical effect. The parts and beneficial effects of this embodiment that are the same as those in the method embodiment will not be described in detail here.

An embodiment of the present disclosure provides a processor-readable storage medium, wherein the processor-readable storage medium stores a computer program, and the computer program is configured to, when executed by a processor, implement the above-mentioned TA determination methods.

The processor-readable storage medium can be any available medium or data storage device that can be accessed by the processor, including but not limited to magnetic storage (such as floppy disk, hard disk, magnetic tape, magneto-optical disk (MO)), optical storage (such as compact disk (CD), digital video disc (DVD), Blu-ray disc (BD), high-definition versatile disc (HVD)), and semiconductor memory (such as read-only memory (ROM), erasable programmable read-only memory (EPROM), electrically erasable programmable read-only memory (EEPROM), non-volatile memory (NAND FLASH), solid-state drive (SSD)), etc.

The implementations of the above-mentioned TA determination method are all applicable to the embodiments of the processor-readable storage medium and can achieve the same technical effects.

Those skilled in the art will appreciate that embodiments of the present disclosure may be provided as methods, systems, or computer program products. Thus, the present disclosure may take the form of an entirely hardware embodiment, an entirely software embodiment, or an embodiment combining software and hardware. Furthermore, the present disclosure may take the form of a computer program product implemented on one or more computer-usable storage media (including but not limited to magnetic disk storage and optical storage) containing computer-usable program code.

The present disclosure is described with reference to flowcharts and/or block diagrams of methods, devices (systems), and computer program products according to embodiments of the present disclosure. It should be understood that each process and/or block in the flowcharts and/or block diagrams, as well as combinations of processes and/or blocks in the flowcharts and/or block diagrams, can be implemented by computer-executable instructions. These computer-executable instructions can be provided to a processor of a general-purpose computer, a special-purpose computer, an embedded processor, or other programmable data processing device to produce a machine, such that the instructions executed by the processor of the computer or other programmable data processing device produce a device for implementing the functions specified in one or more processes in the flowcharts and/or one or more blocks in the block diagrams.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more boxes in the block diagram.

It should be noted that it should be understood that the division of the above modules is merely a division of logical functions. In actual implementation, they can be fully or partially integrated into one physical entity, or they can be physically separated. Moreover, these modules can all be implemented in the form of software called by a processing element; or they can all be implemented in the form of hardware; or some modules can be implemented in the form of software called by a processing element, and some modules can be implemented in the form of hardware. For example, the determination module can be a separately established processing element, or it can be integrated into a chip of the above-mentioned apparatus. In addition, it can also be stored in the memory of the above-mentioned apparatus in the form of program code, and called by a processing element of the above-mentioned apparatus to perform the functions of the above-mentioned determination module. The implementation of other modules is similar. In addition, these modules can all or partly be integrated together, or they can be implemented independently. The processing element described here can be an integrated circuit with signal processing capabilities. In the implementation process, each step of the above method or each of the above modules can be completed by the hardware integrated logic circuit in the processor element or by instructions in the form of software.

For example, each module, unit, sub-unit, or sub-module may be one or more integrated circuits configured to implement the above method, such as one or more application-specific integrated circuits (ASICs), one or more digital signal processors (DSPs), or one or more field programmable gate arrays (FPGAs). For another example, when a module is implemented by scheduling program code through a processing element, the processing element may be a general-purpose processor, such as a central processing unit (CPU) or other processor capable of calling program code. For another example, these modules may be integrated together and implemented in the form of a system-on-a-chip (SOC).

The terms "first", "second", and the like in the specification and claims of the present disclosure are used to distinguish similar objects and are not necessarily used to describe a specific order or precedence. It should be understood that the terms used in this manner are interchangeable where appropriate, so that the embodiments of the present disclosure described herein may be implemented in a sequence other than that illustrated or described herein. In addition, the terms "including" and "having", and any variations thereof, are intended to cover non- exclusive inclusions. For example, a process, method, system, product, or device that includes a series of steps or units need not be limited to those steps or units explicitly listed, but may include other steps or units that are not explicitly listed or that are inherent to these processes, methods, products, or devices. In addition, the use of "and/or" in the specification and claims to indicate at least one of the connected objects, for example, A and/or B and/or C, means that seven situations are included: A alone, B alone, C alone, both A and B present, both B and C present, both A and C present, and all A, B, and C present. Similarly, the use of "at least one of A and B" in the specification and claims should be understood to mean "A alone, B alone, or both A and B present."

Obviously, those skilled in the art may make various changes and modifications to the present disclosure without departing from the spirit and scope of the present disclosure. Thus, if these modifications and variations of the present disclosure fall within the scope of the claims of the present disclosure and their equivalents, the present disclosure is intended to include these modifications and variations.

## Claims

1. A timing advance (TA) determination method, performed by a terminal, and comprising:
receiving TA obtaining indication information from a network device;
determining a TA value in at least one of the following manners according to the TA obtaining indication information:
keeping the TA value unchanged;
determining the TA value according to a preset rule;
adjusting, by the terminal, the TA value; or
setting the TA value to 0.

2. The TA determination method according to claim 1, wherein the TA obtaining indication information comprises:
a manner in which the terminal determines the TA value; or
TA type identifiers;
wherein the manner in which the terminal determines the TA value indicates at least one of the following: keeping the TA value unchanged, adjusting, by the terminal, the TA value, or setting the TA value to 0;
the TA type identifier indicates a TA type corresponding to a cell within a valid area where the terminal is located.

3. The TA determination method according to claim 2, wherein, in a case that the TA obtaining indication information comprises the TA type identifiers,
when the terminal moves from a source cell to a target cell, in a case that the TA type identifier of the source cell is the same as the TA type identifier of the target cell, the terminal uses the same TA as that of the source cell; in a case that the TA type identifier of the source cell is different from the TA type identifier of the target cell, the terminal adjusts the TA value; or
when the terminal moves from the source cell to the target cell, the terminal uses the same TA value as that of a first cell in the target cell, the first cell having the same TA type identifier as that of the target cell; in a case that the TA value of the first cell is unknown, the terminal adjusts the TA value.

4. The TA determination method according to any one of claims 1 to 3, wherein adjusting the TA value comprises:
measuring, by the terminal, downlink reference signals of different cells, and determining, by the terminal, downlink time differences of arrival between the cells according to the measurement results; and
adjusting the TA value according to the downlink time difference of arrival.

5. The TA determination method according to claim 4, wherein measuring, by the terminal, the downlink reference signals of the different cells, and determining, by the terminal, the downlink time differences of arrival between the cells according to the measurement results and adjusting the TA value according to the downlink time difference of arrival comprises:
when the terminal moves from a source cell to a target cell, measuring, by the terminal, arrival times of the downlink reference signals of the source cell and the target cell to obtain the downlink time difference of arrival between the cells, and adding, by the terminal, a TA value of the source cell and the downlink time difference of arrival to obtain a TA value of the target cell.

6. The TA determination method according to claim 1 or 2, wherein the TA obtaining indication information is independently configured for each cell; or the TA obtaining indication information is configured for multiple cells.

7. The TA determination method according to claim 2, wherein, in a case that the TA obtaining indication information comprises the manner in which the terminal determines the TA value, the method further comprises:
receiving inter-cell synchronization information from the network device, and adjusting the TA value according to the inter-cell synchronization information.

8. The TA determination method according to claim 7, wherein the inter-cell synchronization information comprises a synchronization difference of each cell relative to a reference cell.

9. A timing advance (TA) determination method, performed by a network device, and comprising:
sending TA obtaining indication information to a terminal, wherein the TA obtaining indication information indicates to the terminal that a TA value is determined in at least one of the following manners:
keeping the TA value unchanged;
determining the TA value according to a preset rule;
adjusting, by the terminal, the TA value; or
setting the TA value to 0.

10. The TA determination method according to claim 9, wherein the TA obtaining indication information comprises:
a manner in which the terminal determines the TA value; or
TA type identifiers;
wherein the manner in which the terminal determines the TA value indicates at least one of the following: keeping the TA value unchanged, adjusting, by the terminal, the TA value, or setting the TA value to 0;
the TA type identifier indicates a TA type corresponding to a cell within a valid area where the terminal is located.

11. The TA determination method according to claim 9 or 10, wherein the TA obtaining indication information is independently configured for each cell; or the TA obtaining indication information is configured for multiple cells.

12. The TA determination method according to claim 10, wherein, in a case that the TA obtaining indication information comprises the manner in which the terminal determines the TA value, the method further comprises:
sending inter-cell synchronization information to the terminal to instruct the terminal to adjust the TA value according to the inter-cell synchronization information.

13. The TA determination method according to claim 12, wherein the inter-cell synchronization information comprises a synchronization difference of each cell relative to a reference cell.

14. The TA determination method according to claim 10, wherein, in a case that the TA obtaining indication information comprises the TA type identifiers,
when the terminal moves from a source cell to a target cell, in a case that the TA type identifier of the source cell is the same as the TA type identifier of the target cell, the TA obtaining indication information instructs the terminal to use the same TA as that of the source cell; in a case that the TA type identifier of the source cell is different from the TA type identifier of the target cell, the TA obtaining indication information instructs the terminal to adjust the TA value; or
when the terminal moves from the source cell to the target cell, the terminal uses the same TA value as that of a first cell in the target cell, the first cell having the same TA type identifier as that of the target cell; in a case that the TA value of the first cell is unknown, the TA obtaining indication information instructs the terminal to adjust the TA value.

15. A timing advance (TA) determination apparatus, comprising a memory, a transceiver, and a processor;
wherein the memory is configured to store a computer program; the transceiver is configured to transmit and receive data under the control of the processor; and the processor is configured to read the computer program in the memory and perform the following steps:
receiving TA obtaining indication information from a network device;
determining a TA value in at least one of the following manners according to the TA obtaining indication information:
keeping the TA value unchanged;
determining the TA value according to a preset rule;
adjusting, by the terminal, the TA value; or
setting the TA value to 0.

16. The TA determination apparatus according to claim 15, wherein the TA obtaining indication information comprises:
a manner in which the terminal determines the TA value; or
TA type identifiers;
wherein the manner in which the terminal determines the TA value indicates at least one of the following: keeping the TA value unchanged, adjusting, by the terminal, the TA value, or setting the TA value to 0;
the TA type identifier indicates a TA type corresponding to a cell within a valid area where the terminal is located.

17. The TA determination apparatus according to claim 16, wherein, in a case that the TA obtaining indication information comprises the TA type identifiers, the processor is configured to read the computer program in the memory and perform the following steps:
when the terminal moves from a source cell to a target cell, in a case that the TA type identifier of the source cell is the same as the TA type identifier of the target cell, using, by the terminal, the same TA as that of the source cell; in a case that the TA type identifier of the source cell is different from the TA type identifier of the target cell, adjusting the TA value; or
when the terminal moves from the source cell to the target cell, using, by the terminal, the same TA value as that of a first cell in the target cell, the first cell having the same TA type identifier as that of the target cell; in a case that the TA value of the first cell is unknown, adjusting the TA value.

18. The TA determination apparatus according to any one of claims 15 to 17, wherein the processor is configured to read the computer program in the memory and perform the following steps:
measuring downlink reference signals of different cells, and determining a downlink time difference of arrival between the cells according to the measurement results;
adjusting the TA value according to the downlink time difference of arrival.

19. The TA determination apparatus according to claim 18, wherein the processor is configured to read the computer program in the memory and perform the following steps:
when the terminal moves from a source cell to a target cell, measuring arrival times of the downlink reference signals of the source cell and the target cell to obtain the downlink time difference of arrival between the cells; and adding a TA value of the source cell and the downlink time difference of arrival to obtain a TA value of the target cell.

20. The TA determination apparatus according to claim 15 or 16, wherein the TA obtaining indication information is independently configured for each cell; or the TA obtaining indication information is configured for multiple cells.

21. The TA determination apparatus according to claim 16, wherein, in a case that the TA obtaining indication information comprises the manner in which the terminal determines the TA value, the processor is further configured to read a computer program in the memory and perform the following steps:
receiving inter-cell synchronization information from the network device, and adjusting the TA value according to the inter-cell synchronization information.

22. The TA determination apparatus according to claim 21, wherein the inter-cell synchronization information comprises a synchronization difference of each cell relative to a reference cell.

23. A timing advance (TA) determination apparatus, comprising a memory, a transceiver, and a processor;
wherein the memory is configured to store a computer program; the transceiver is configured to transmit and receive data under the control of the processor; and the processor is configured to read the computer program in the memory and perform the following steps:
sending TA obtaining indication information to a terminal, wherein the TA obtaining indication information indicates to the terminal that a TA value is determined in at least one of the following manners:
keeping the TA value unchanged;
determining the TA value according to a preset rule;
adjusting, by the terminal, the TA value; or
setting the TA value to 0.

24. The TA determination apparatus according to claim 23, wherein the TA obtaining indication information comprises:
a manner in which the terminal determines the TA value; or
TA type identifiers;
wherein the manner in which the terminal determines the TA value indicates at least one of the following: keeping the TA value unchanged, adjusting, by the terminal, the TA value, or setting the TA value to 0;
the TA type identifier indicates a TA type corresponding to a cell within a valid area where the terminal is located.

25. The TA determination apparatus according to claim 23 or 24, wherein the TA obtaining indication information is independently configured for each cell; or the TA obtaining indication information is configured for multiple cells.

26. The TA determination apparatus according to claim 25, wherein, in a case that the TA obtaining indication information comprises the manner in which the terminal determines the TA value, the processor is configured to read the computer program in the memory and perform the following step:
sending inter-cell synchronization information to the terminal to instruct the terminal to adjust the TA value according to the inter-cell synchronization information.

27. The TA determination apparatus according to claim 26, wherein the inter-cell synchronization information comprises a synchronization difference of each cell relative to a reference cell.

28. The TA determination apparatus according to claim 24, wherein, in a case that the TA obtaining indication information comprises the TA type identifiers,
when the terminal moves from a source cell to a target cell, in a case that the TA type identifier of the source cell is the same as the TA type identifier of the target cell, the TA obtaining indication information instructs the terminal to use the same TA as that of the source cell; in a case that the TA type identifier of the source cell is different from the TA type identifier of the target cell, the TA obtaining indication information instructs the terminal to adjust the TA value; or
when the terminal moves from the source cell to the target cell, the terminal uses the same TA value as that of a first cell in the target cell, the first cell having the same TA type identifier as that of the target cell; in a case that the TA value of the first cell is unknown, the TA obtaining indication information instructs the terminal to adjust the TA value.

29. A timing advance (TA) determination apparatus, comprising:
a receiving unit, configured to receive TA obtaining indication information from a network device;
a determining unit, configured to determine a TA value in at least one of the following manners according to the TA obtaining indication information:
keeping the TA value unchanged;
determining the TA value according to a preset rule;
adjusting, by the terminal, the TA value; or
setting the TA value to 0.

30. The TA determination apparatus according to claim 29, wherein the TA obtaining indication information comprises:
a manner in which the terminal determines the TA value; or
TA type identifiers;
wherein the manner in which the terminal determines the TA value indicates at least one of the following: keeping the TA value unchanged, adjusting, by the terminal, the TA value, or setting the TA value to 0;
the TA type identifier indicates a TA type corresponding to a cell within a valid area where the terminal is located.

31. The TA determination apparatus according to claim 30, wherein, in a case that the TA obtaining indication information comprises the TA type identifiers,
when the terminal moves from a source cell to a target cell, in a case that the TA type identifier of the source cell is the same as the TA type identifier of the target cell, the terminal uses the same TA as the source cell; in a case that the TA type identifier of the source cell is different from the TA type identifier of the target cell, the determining unit adjusts the TA value; or
when the terminal moves from the source cell to the target cell, the terminal uses the same TA value as that of a first cell in the target cell, the first cell having the same TA type identifier as that of the target cell; in a case that the TA value of the first cell is unknown, the determining unit adjusts the TA value.

32. The TA determination apparatus according to any one of claim 29 to 31, wherein the determining unit is specifically configured to:
measure downlink reference signals of different cells, and determine downlink time differences of arrival between the cells according to the measurement results; and
adjust the TA value according to the downlink time difference of arrival.

33. The TA determination apparatus according to claim 32, wherein when the terminal moves from a source cell to a target cell, the determining unit is specifically configured to: measure arrival times of the downlink reference signals of the source cell and the target cell to obtain the downlink time difference of arrival between the cells; and add a TA value of the source cell and the downlink time difference of arrival to obtain a TA value of the target cell.

34. The TA determination apparatus according to claim 29 or 30, wherein the TA obtaining indication information is independently configured for each cell; or the TA obtaining indication information is configured for multiple cells.

35. The TA determination apparatus according to claim 30, wherein, in a case that the TA obtaining indication information comprises the manner in which the terminal determines the TA value, the receiving unit is further configured to:
receive inter-cell synchronization information from the network device, and adjust the TA value according to the inter-cell synchronization information.

36. The TA determination apparatus according to claim 35, wherein the inter-cell synchronization information comprises a synchronization difference of each cell relative to a reference cell.

37. A timing advance (TA) determination apparatus, comprising:
a sending unit, configured to send TA obtaining indication information to a terminal, wherein the TA obtaining indication information indicates to the terminal that a TA value is determined in at least one of the following manners:
keeping the TA value unchanged;
determining the TA value according to a preset rule;
adjusting, by the terminal, the TA value; or
setting the TA value to 0.

38. The TA determination apparatus according to claim 37, wherein the TA obtaining indication information comprises:
a manner in which the terminal determines the TA value; or
TA type identifiers;
wherein the manner in which the terminal determines the TA value indicates at least one of the following: keeping the TA value unchanged, adjusting, by the terminal, the TA value, or setting the TA value to 0;
the TA type identifier indicates a TA type corresponding to a cell within a valid area where the terminal is located.

39. The TA determination apparatus according to claim 37 or 38, wherein the TA obtaining indication information is independently configured for each cell; or the TA obtaining indication information is configured for multiple cells.

40. The TA determination apparatus according to claim 39, wherein, in a case that the TA obtaining indication information comprises the manner in which the terminal determines the TA value, the sending unit is further configured to:
send inter-cell synchronization information to the terminal to instruct the terminal to adjust the TA value according to the inter-cell synchronization information.

41. The TA determination apparatus according to claim 40, wherein the inter-cell synchronization information comprises a synchronization difference of each cell relative to a reference cell.

42. The TA determination apparatus according to claim 38, wherein, in a case that the TA obtaining indication information comprises the TA type identifiers,
when the terminal moves from a source cell to a target cell, in a case that the TA type identifier of the source cell is the same as the TA type identifier of the target cell, the TA obtaining indication information instructs the terminal to use the same TA as that of the source cell; in a case that the TA type identifier of the source cell is different from the TA type identifier of the target cell, the TA obtaining indication information instructs the terminal to adjust the TA value; or
when the terminal moves from the source cell to the target cell, the terminal uses the same TA value as that of a first cell in the target cell, the first cell having the same TA type identifier as that of the target cell; in a case that the TA value of the first cell is unknown, the TA obtaining indication information instructs the terminal to adjust the TA value.

43. A processor-readable storage medium storing a computer program, wherein the computer program is configured to, when executed by a processor, implement the method according to any one of claims 1 to 8.

44. A processor-readable storage medium storing a computer program, wherein the computer program is configured to, when executed by a processor, implement the method according to any one of claims 9 to 14.
